(19) **Europäisches Patentamt / European Patent Office / Office européen des brevets**

(11) **EP 3 901 289 B1**

(12) **EUROPEAN PATENT SPECIFICATION**

(45) Date of publication and mention of the grant of the patent:
**14.05.2025 Bulletin 2025/20**

(21) Application number: **21170240.2**

(22) Date of filing: **23.04.2021**

(51) International Patent Classification (IPC):
*C21B 3/02* (2006.01)    *C04B 5/06* (2006.01)
*C21B 3/06* (2006.01)    *C21B 3/08* (2006.01)
*C21C 5/36* (2006.01)    *C22B 7/04* (2006.01)
*C04B 111/00* (2006.01)

(52) Cooperative Patent Classification (CPC):
**C21B 3/06; C04B 5/06; C21B 3/02; C21B 3/08;
C21C 5/36; C22B 7/04;** C04B 2111/00215;
C21B 2400/02; C21B 2400/024; C21B 2400/026;
C21C 2300/06; Y02P 10/20; Y02P 10/25;
Y02W 30/50

(54) **METHOD FOR PRODUCING A MAINLY CRYSTALLINE SOLIDIFIED STEEL SLAG**

VERFAHREN ZUR HERSTELLUNG EINER ÜBERWIEGEND KRISTALLINEN ERSTARRTEN STAHLSCHLACKE

PROCÉDÉ DE PRODUCTION D'UN LAITIER D'ACIER SOLIDIFIÉ PRINCIPALEMENT CRISTALLIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2020 EP 20171438**

(43) Date of publication of application:
**27.10.2021 Bulletin 2021/43**

(73) Proprietor: **ORBIX SOLUTIONS
6240 Farciennes (BE)**

(72) Inventors:
• **OUNOUGHENE, Ghania
  Genk (BE)**
• **VAN MECHELEN, Dirk
  Tisselt (BE)**

(74) Representative: **Gevers Patents
De Kleetlaan 7A
1831 Diegem (BE)**

(56) References cited:
JP-A- 2002 201 051     US-A- 4 957 547
US-A1- 2001 046 251

**Description**

The present invention relates to a method for producing a mainly crystalline solidified steel slag to produce solid steel slag, in particular a solid steel slag which can be used, after crushing, as aggregate in construction. The mainly crystalline solidified steel slag has in particular an average amorphous content of at most 50 wt.%. In this way steel slag aggregate produced from the solidified steel slag is suitable for construction purposes and in particular as aggregate in cementitious or bituminous concrete for road constructions.

The invention more particularly relates to a method which comprises the steps of:

- producing a liquid steel slag on top of molten steel, which liquid steel slag is composed to contain at least CaO, $SiO_2$, MgO and $Al_2O_3$ and to have a first basicity ($B_1$), defined as the weight ratio between the CaO content of the liquid steel slag and the $SiO_2$ content thereof, which is higher than 1.2;
- separating the liquid steel slag from the molten steel;
- lowering the basicity of the liquid steel slag separated from the molten steel from said first basicity ($B_1$) to a second basicity ($B_2$) at least partially by dissolving at least one low basicity material in the liquid steel slag, which low basicity material contains at least 50 wt% of $SiO_2$ and has a further basicity, defined as the weight ratio between its CaO content and its $SiO_2$ content, which is equal to zero when it is free of CaO or which is smaller than 0.30 when it contains CaO; and
- solidifying the liquid steel slag having said second basicity ($B_2$) by cooling it down to produce said mainly crystalline solidified steel slag.

During the production of steel, in particular of carbon steel and stainless steel, large amounts of by-products are generated mainly in the form of steel slags. Steel-making slags are classified according to the steel manufacturing process wherein they are generated. The production of carbon steel generates in particular electric arc furnace slags (EAF slags), basic oxygen furnace slags (BOF slags) and ladle metallurgy slags (LM slags). The BOF slags include in particular LD slags which are obtained as by-product in the production of steel by the Linz-Donawitz process. Stainless steel-making slags are obtained during the production of stainless steel and contain chromium, and optionally also other alloying elements such as nickel. Stainless steel making slags include electric arc furnace slags (EAF slags), argon oxygen decarburization slags (AOD slags), vacuum oxygen decarburation slags (VOD slags) and ladle metallurgy slags (LM slags).

The main constituents of steel-making slags are silicon dioxide ($SiO_2$), calcium oxide (CaO) and magnesium oxide (MgO). Usually steel-making slags also contain aluminium oxide ($Al_2O_3$). Aluminium oxide is normally produced in steel slag by oxidation of metallic aluminium which is often added thereto in particular to deoxidize the steel. In an EAF for stainless steel metallic aluminium may for example also be added to reduce the chromium so that less chromium is lost via the slag. Moreover, spinel phases can be generated in the steel slag which can bind chromium ions in the steel slag and can therefore reduce leaching of chromium during later constructional applications of the steel slag. Metallic aluminium can also be used to reduce or stop foaming reactions in the steel slag. Metallic aluminium reacts indeed exothermically with slag, thereby raising the temperature of the slag, reducing viscosity and allowing gases such as carbon monoxide and carbon dioxide to be released from the more fluid liquid.

US 4 957 547 discloses a steel slag which has a relatively high aluminium content, namely an aluminium content of 2 to 15% of $Al_2O_3$. This steel slag is an acidic steel slag having a high iron content, namely an iron content of 20 to 77.2% FeO. It is composed to suppress foaming of the slag in gas-forming metallurgical reactions. The steel slag contains only a small amount of CaO, namely 1 to 10% of CaO, and a larger amount of $SiO_2$, namely 10 to 30% of $SiO_2$. It is therefore an acidic slag having a low basicity.

Steel slag is a calcium silicate slag which normally contains an amount of dicalcium silicates and also other silicates such as for example calcium magnesium silicates. A problem of such calcium silicate slags is that, upon slow cooling thereof, for example in the open air, a portion thereof will usually disintegrate into a fine powder. This is due to the formation of crystalline dicalcium silicate (C2S) phases which undergo several phase transformations during the cooling of the slag. The last transformation, which is the transformation from the β to the γ-polymorph, occurs at about 490°C, and is accompanied by a 12% volume expansion. This expansion causes high internal stresses in the slag and as a result thereof the disintegration of the solid slag into a fine powder. In contrast to the larger solid steel slag pieces, which can be crushed to produce an aggregate that can be used in construction materials such as concrete and asphalt, the fines cannot be used as such in these applications. They have indeed too high water absorption properties so that they cannot be used in cementitious or bituminous concrete and are therefore difficult to valorise.

As described in the article "Options to prevent dicalcium silicate-driven disintegration of stainless steel slags" of Y. Pontikes et al. in Archives of Metallurgy and Materials, Volume 55, Issue 4, several potential routes are already known for avoiding the formation of γ-dicalcium silicate. These potential routes include the chemical stabilization of the slag by additions such as borates and phosphates, the change in slag chemistry/basicity by the addition of waste glass and a fast cooling (quenching or granulation) of the liquid slag.

By the addition of borates and phosphates the transition of the β to the γ-polymorph of dicalcium silicate can be prevented or the amount of γ-polymorph which is still formed can at least be reduced. A drawback of borates is however their relatively high cost. Moreover, borates have been found to be toxic so that at least in a number of countries they are or will be forbidden. In Europe, for example, due to the validity of REACH (EC Regulation No. 1907/2006 concerning the Registration, Evaluation, Authorization and Restriction of Chemicals), the addition of borates creates a major problem with regard to the stainless steel slag stabilization. The borates are considered to be toxic for the reproduction and are part of the CMR (Carcinogenic, Mutagenic or Toxic for the Reproduction) list of substances. Phosphates have to be used in larger amounts than borates and involve therefore also a relatively high additional cost. Moreover, just as borates, phosphates evaporate from molten steel slag and are therefore partially lost causing also health issues.

Stainless steel slag can also be stabilized by means of aluminium. Aluminium has to be added in much larger amounts than for example borates to stabilize the steel slag. Aluminium can be added in the form of metallic aluminium or in the form of alumina. Metallic aluminium has a higher aluminium concentration than alumina but is generally more expensive. Aluminium dross or salt cakes could be used as a secondary aluminium source. In practice metallic aluminium and salt is already recycled from aluminium dross leaving a secondary product which is rich in aluminium oxide. Such a product is available on the market under the tradename Valoxy®. This product comprises about 75 wt.% of alumina.

In the article "Stabilisation and Microstructural Modification of Stainless Steel Converter Slag by Addition of an Alumina Rich By-Product" of R. I. Iacobescu et al. published online on 04 January 2014 (DOI 10.1007/s12649-013-9287-y) a number of experiments are described and also FactSage thermodynamic calculations demonstrating that an AOD slag, having a basicity of about 1.69 can be stabilized by adding about 17% of Valoxy®. It can be calculated that the obtained mixture of AOD slag and Valoxy® had a basicity of about 1.6 and an $Al_2O_3$ content of about 12.5 wt.%. In the same article it is mentioned that a slag having a basicity of about 2 would require to add about 23 % of Valoxy®. The authors assumed that the AOD slag is becoming unstable when the γ-C2S content is about 4 wt.%. They realise that it is quite challenging industrially to dissolve such amounts of the secondary alumina source in the molten steel slag contained in a slag pot. The melting point of Valoxy® is indeed quite high, namely about 1650°C. Due to the temperature drop of the molten steel slag in the slag pot as a result of the Valoxy® addition, a heat generating agent, such as for example FeSi, should be added to the slag pot. Of course, in this way the aluminium addition becomes quite expensive.

Another way of stabilizing the steel slag is to lower the basicity thereof by adding a low basicity material thereto. Use can be made for example of waste glass or of any other material that contains a large amount of silica such as quartz sand or fly ash. A quite large amount of waste glass has however to be added to lower the basicity of the steel slag to a sufficient extent. Sakamoto (in "Effects of MgO based glass addition on the dusting of stainless steel slag" in Current Advance in Material and Processes, 14(4):939, 2001) showed for example on a laboratory scale that stabilization of a stainless steel decarburization slag would require the addition of 12 wt.% of waste glass containing 70-75 wt.% $SiO_2$. Although the cost of such a glass addition is much lower than the cost of a borate addition, an additional slag treatment process is required to be able to dissolve such large amount of glass in the industrially used slag pots. Additional heat required to dissolve the glass could for example be generated by injecting oxygen in the slag pot. If the slag contains FeO, the injected oxygen could react exothermally with this iron oxide to produce $Fe_2O_3$. This additional treatment involves however additional time and costs and requires the presence of a sufficient amount of FeO in the slag. The required amount of glass can moreover not be added to the steel furnace itself since low basicity slags cause rapid refractory degradation and, in stainless steel making, low chromium yields.

In WO 2015/144903 tests are described wherein a relatively large amount of waste glass was first applied in a slag pot before the liquid steel slag was poured therein. Although the heat of the liquid slag was high enough to melt the glass, a problem was how to mix the glass homogeneously in the liquid slag and this without too many heat losses. For large amounts of glass, only a part of the waste glass melted. A drawback of an incomplete melting of the glass is that glass inclusion can be formed in the solid slag which, when used as construction material, may cause deleterious swelling reaction as a result of the so-called alkali-silicate reactions.

A final way to reduce or avoid the formation of γ-dicalcium silicate in steel slag consists in a fast cooling of the steel slag. As set forth in the above-mentioned article of Y. Pontikes et al. the cooling rate required to avoid the formation of γ-dicalcium silicate is however quite high. This cooling rate should be about 5°C/s. A drawback of such a fast cooling process is that the required cooling rate cannot be achieved in a slag yard where the slag pots are poured out and the steel slag is solidified by air-cooling, even when this air-cooling is assisted by spraying water onto the solidified slag. A very fast cooling can only be achieved by an air or water granulation technique wherein the liquid slag is solidified and cooled down in a jet of air or water. Due to this fast cooling, a large portion of the solidified steel slag is however amorphous (glassy), which is not desired especially when using the steel slag as an aggregate in concrete or asphalt for road constructions. Indeed, the amorphous phases bind less strongly to cement and also reduce the polished stone value (PSV) of the aggregate (determined for example in accordance with BS EN 1097 Part 8), which is an important parameter when used in road constructions. Indeed, in the construction of a road, the surface layer needs to retain its roughness for as long as possible in order to provide skid resistance for traffic. The higher the polished stone value the longer the aggregate will remain rough when used in road surfacing. A final drawback of water or air granulation techniques are that a quite fine aggregate is produced, which is less valuable than coarser aggregates.

Tests wherein a steel slag is solidified by means of an air granulation technique are disclosed in the article "Stabilization Studies of EAF Slag for Its Use as Materials in Construction" by Q. Yang et al. in Proceedings, Asiasteel 24 Sep 2012, The Chinese Society for Metals, 6 p. In the air granulation test, wherein the steel slag was cooled down in an air stream in about one minute, the slag was stabilized so that no fines were produced. In the slow cooling test, wherein the slag was again cooled down within 5 hours from 1600°C, i.e. at an average cooling rate of about 5°C/min, the slag disintegrated into fines.

In WO 2015/144903 a slag solidification method is claimed wherein the liquid slag is poured in layers on top of one another the keep the solid slag for a relatively long time at a temperature higher than the temperature at which β-C2S is formed. In this way more calcium magnesium silicates are formed in the solidified steel slag, in particular merwinite. It was found that when subsequently cooling the solidified slag further by spraying with water, more merwinite remains in the slag and less dicalcium silicate is formed therein. By such a relatively easy cooling process, which does not result in a high content of amorphous phases, the amount of C2S could be reduced considerably, namely with about 50%. Boron was however still added to be able to minimize the formation of fines.

An object of the present invention is now to provide a new method for producing a mainly crystalline solidified steel slag which enables to reduce the formation of fines, or in other words the formation of $\gamma$-dicalcium silicate, by a chemical stabilization of the steel slag which does not require the use of boron and/or phosphates to be able to stabilize the steel slag with the addition of only a relatively small amount of stabilizer to be added to the liquid steel slag which is separated from the molten steel.

To this end, the method according to the present invention is characterised in that the difference between said first basicity ($B_1$, i.e. the basicity of the slag produced on top of the molten steel) and said second basicity ($B_2$, i.e. the basicity of the solidified steel slag) is comprised between 0.02 and 0.2 and the liquid steel slag which is solidified to produce said solidified steel slag is composed to contain A wt.% of $Al_2O_3$ (i.e. the solidified steel slag contains $A$ wt.% of $Al_2O_3$), with $A$ being defined by the following equation (1):

$$A \geq -5.51 * (B_2 - M * 0.022 - F * 0.011)^2 + 26.67 * (B_2 - M * 0.022 - F * 0.011) - 23 \qquad \text{(equation 1);}$$

wherein:

   $A$ is the $Al_2O_3$ content of, expressed in weight percent, of the solidified steel slag;
   $M$ is the MgO content, expressed in weight percent, of the solidified steel slag;
   $F$ is the $CaF_2$ content, expressed in weight percent, of the solidified steel slag, with $F$ being equal to zero when the solidified steel slag is free of $CaF_2$; and
   $B_2$ is said second basicity of the solidified steel slag.

In the method according to the present invention, only a relatively small amount of the low basicity material is added, more particularly an amount which lowers the basicity of the steel slag with at most 0.2. In case the low basicity material comprises for example 7% CaO and 70% $SiO_2$, and the liquid steel slag for example 52% of CaO and 31% of SiO2, about 6 parts by weight of the low basicity material should be added per 100 pbw of the liquid steel slag to which it is added to reduce the basicity of the liquid steel slag with 0.2. Such relatively small amounts of the low basicity material can relatively easily be dissolved in the liquid steel slag which has been separated from the molten steel. It is for example possible to use the same installation which has commonly be used for injecting borates in the liquid steel slag.

Depending on the basicity of the liquid steel slag on top of the molten steel, a particular, second basicity can thus be achieved by the addition of the low basicity material. As such, such relatively small amounts of the low basicity material are not enough to stabilize the steel slag. In accordance with the present invention, the steel slag is however stabilized by providing, depending on the magnesium content of the steel slag, the calcium fluoride content thereof and the final basicity of the steel slag, i.e. the basicity obtained after the addition of the low basicity material, a minimum amount of aluminium oxide in the steel slag as determined by equation (1). This amount of aluminium oxide can easily be provided in the steel slag by using an aluminium rich material in the steel furnace and optionally by adding an additional amount of an aluminium rich material to the liquid steel slag which is tapped out of the furnace.

The minimum amount of aluminium oxide as determined by equation (1) is not enough to avoid any formation of C2S (dicalcium silicate) in the steel slag when cooled down slowly. However, when it is cooled down sufficiently quickly over the temperature range wherein β and $\gamma$-C2S are formed, it is possible to obtain a stable slag wherein no or only a small amount of $\gamma$-C2S is formed which causes almost no fines in the solidified steel slag or only a small amount. The formation of $\gamma$-C2S can further be reduced by keeping the steel slag first for some time at a temperature in the range wherein merwinite is formed and by cooling the steel slag only then with water. Due to the relatively slow transformation of merwinite into dicalcium silicate, the formation of C2S can thus be avoided or reduced more efficiently.

In the method according to the present invention the basicity of the steel slag is reduced with at least 0.02. The larger the amount of the low basicity material, the less aluminium rich material has to be added. Since there is plenty low basicity material such as waste glass/cullet available, at a very low or at no cost, it is advantageous to use a maximum amount of such low basicity material to reduce the amount of aluminium that has to be provided in the steel slag.

In an embodiment of the method according to the present invention, the difference between said first basicity ($B_1$) and said second basicity ($B_2$) is smaller than 0.17, preferably smaller than 0.14 and more preferably smaller than 0.11.

The smaller the difference between the first basicity and the second basicity, the less low basicity material has to be dissolved in the liquid steel slag and the easier it is to dissolve the low basicity material in the liquid steel slag. For the above described CaO and $SiO_2$ contents of glass and steel slag, a reduction of the basicity of the slag with 0.11 would only require about 3 pbw (parts by weight) of glass to be added to 100 pbw of steel slag, which is similar to the amount of borates that are presently commonly injected in liquid steel slag to stabilize the slag. The existing borate injection installation can thus be used to inject such an amount of low basicity material in the liquid steel slag.

In an embodiment of the method according to the present invention or according to the preceding embodiment, the difference between said first basicity ($B_1$) and said second basicity ($B_2$) is larger than 0.04, preferably larger than 0.06.

The larger the amount of low basicity material, the lower the basicity of the final slag and the smaller the amount of aluminium that has to be provided in the steel slag.

In an embodiment of the method according to the present invention or according to any one of the preceding embodiments, $A$ is defined by the following equation (2):

$$A \geq -5.51 * (B_2 - M * 0.022 - F * 0.011)^2 + 26.67 * (B_2 - M * 0.022 - F * 0.011) - 22.26 \qquad \text{(equation 2)}.$$

The amount of $Al_2O_3$ according to this equation (2) is higher than the amount of $Al_2O_3$ according to equation (1). Both equations have been established to leave a certain amount of C2S (dicalcium silicate) in the steel slag when the steel slag is slowly cooled, but equation (2) corresponds to a smaller amount of C2S than equation (1). When applying equation (2), the formation of fines can thus be avoided or at least reduced more easily, in particular by following an appropriate cooling profile.

In an embodiment of the method according to the present invention or according to any one of the preceding embodiments, $A$ is defined by the following equation (3):

$$A \geq -5.68 * (B_2 - M * 0.022 - F * 0.011)^2 + 27.21 * (B_2 - M * 0.022 - F * 0.011) - 21.2 \qquad \text{(equation 3)};$$

and preferably by the following equation (4):

$$A \geq -5.82 * (B_2 - M * 0.022 - F * 0.011)^2 + 27.64 * (B_2 - M * 0.022 - F * 0.011) - 20 \qquad \text{(equation 4)}.$$

The amount of $Al_2O_3$ according to these equations is even higher than the amount of $Al_2O_3$ according to the previous equation. The cooling of the steel slag is therefore less critical to avoid the formation of $\gamma$-C2S, and the steel slag may even be cooled down relatively slowly without the formation of a large amount of fines.

In an embodiment of the method according to the present invention or according to any one of the preceding embodiments, A is defined by the following equation (5):

$$A \leq -5.82 * (B_2 - M * 0.022 - F * 0.011 + a)^2 + 27.64 * (B_2 - M * 0.022 - F * 0.011 + a) - 18 \qquad \text{(equation 5)},$$

wherein a is equal to 0.40, preferably equal to 0.30 and more preferably equal to 0.20.

In this embodiment, the amount of $Al_2O_3$ is limited to a maximum amount as a function of the basicity of the final steel slag composition and as a function of the magnesium oxide content and the calcium fluoride content thereof. For the stabilization of the steel slag, no higher amounts of $Al_2O_3$ are required.

In an embodiment of the method according to the present invention or according to any one of the preceding embodiments, at least one first aluminium rich material is used to produce said liquid steel slag on top of the molten steel, which first aluminium rich material has an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$.

The first aluminium rich material thus arrives on top of the molten steel. Even if the aluminium rich material comprises alumina in a form having a high melting point, it will melt on top of the liquid steel. Moreover, the aluminium will have its known advantageous effects.

Preferably, said first aluminium rich material contains metallic aluminium and/or trivalent aluminium, and comprises preferably aluminium dross and/or at least aluminium oxides recycled from aluminium dross.

Metallic aluminium is advantageous since it assists in reducing iron oxides and chromium. Moreover, oxidation of metallic aluminium produces extra heat. Notwithstanding the much higher melting point of trivalent aluminium compounds, in particular aluminium oxide or hydroxide, it is possible to dissolve such trivalent aluminium compounds in the slag on top of the molten steel due to the high temperature of the molten steel. Using aluminium dross, is advantageous since it is a by-product of the aluminium refining. The metallic aluminium, and the salts, are preferably first recycled from the aluminium dross but since metallic aluminium has advantageous effects on the steel, it does not have to be removed from the aluminium dross fraction which is added to the steel.

Preferably, said first aluminium rich material contains metallic aluminium and preferably contains at least 60 wt.%, more preferably at least 70 wt.% and most preferably at least 80 wt.% of metallic aluminium, expressed as weight percent Al.

As mentioned already hereabove, metallic aluminium is advantageous since it assists in reducing iron oxides and chromium. Moreover, oxidation of metallic aluminium produces extra heat.

In an embodiment of the method according to the present invention or according to any one of the preceding embodiments, at least one second aluminium rich material, which has an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$, is added to the liquid steel slag separated from the molten steel.

A portion of the aluminium can be added to the liquid steel slag when it is removed or when it is being removed from the molten steel.

Preferably, said second aluminium rich material contains metallic aluminium and preferably contains at least 60 wt.%, more preferably at least 70 wt.% and most preferably at least 80 wt.% of metallic aluminium, expressed as weight percent Al.

An advantage of this embodiment is that the metallic aluminium will reduce the foaming of the steel slag. Compared to trivalent aluminium metallic aluminium has the important advantage that the oxidation thereof in the steel slag will produce additional heat. The liquid steel slag contained in the slag pot will thus have a higher temperature so that the low basicity material will be more easily dissolved therein.

Preferably, said second aluminium rich material is injected at least partially into the liquid steel slag during tapping of the liquid steel slag into a slag pot.

In this way, an efficient mixing between the second aluminium rich material and the liquid steel slag is obtained without having to stir the liquid steel slag and thus without causing more heat losses.

In an embodiment of the method according to the present invention or according to any one of the preceding embodiments, said first basicity ($B_1$) is higher than 1.3 and in particular higher than 1.4.

Providing more aluminium in, and lowering the basicity of the steel slag to reduce or avoid the formation of C2S is more efficient in case the initial basicity of the steel slag is higher.

In an embodiment of the method according to the present invention or according to any one of the preceding embodiments, said liquid steel slag is an EAF stainless steel slag produced in an electric arc furnace.

EAF stainless steel slags usually have a relatively low basicity. However, notwithstanding the relatively low basicity, often quite large amounts of fines are surprisingly formed when no borates are added to the slag. In accordance with the invention, this may be due to the fact that they often contain no or only a relatively small amount of calcium fluoride. It has indeed been found that not only magnesium oxide but also calcium fluoride may create stabilizing phases in the solidified steel slag, namely respectively merwinite and cuspidine. Especially for EAF slags, it is thus also important to provide the required amount of aluminium in the slag as a function of the magnesium and calcium fluoride content thereof and as a function of the final basicity of the slag.

In an embodiment of the method according to the present invention or according to any one of the preceding embodiments, said liquid steel slag is an AOD stainless steel slag produced in an argon oxygen decarburization furnace.

In an AOD furnace usually no aluminium is applied or only a small amount, in particular to avoid foaming of the liquid slag. However, due to the relatively high basicity of AOD slags, it is difficult to avoid γ-C2S formation and, nowadays, the addition of borates remains the only practical solution to avoid the formation of too large amounts of γ-C2S. The method according to the present invention offers however an industrially feasible, and economically attractive, alternative to the use of the toxic and quite expensive borates.

In an embodiment of the method according to the present invention or according to any one of the preceding embodiments, said liquid steel slag is an LM stainless steel slag produced in a ladle furnace.

Also this steel slag has a relatively high basicity. It is produced in the finishing ladle which is used for the continuous casting of the molten steel. This means that the LM steel slag remains for a long time in the finishing ladle and has a substantially lower temperature when being tapped into the slag pot. Due to this lower temperature, it is thus even more difficult to dissolve slag stabilizers in the liquid steel slag. Also for such "cold" steel slags, the method according to the present invention offers an industrially feasible, and economically attractive, alternative to the use of the toxic and quite expensive borates.

In an embodiment of the method according to the present invention or according to any one of the preceding embodiments, said at least one low basicity material is added in an amount of less than 5.0 %, preferably in an amount of less than 4.0 % and more preferably in an amount of less than 3.0 % of the weight of the molten steel slag which is separated from the molten steel.

Such amounts of low basicity material can relatively easily be dissolved in the liquid slag in the slag pot without having to apply additional heat to the slag in the slag pot, for example by providing exothermic reactions therein.

In an embodiment of the method according to the present invention or according to any one of the preceding embodiments, the liquid steel slag which is solidified to produce said solidified steel slag comprises at least 4.0 wt.% MgO, preferably at least 5.0 wt.% MgO, and more preferably at least 6.0 wt.% MgO.

The presence of magnesium oxide in the steel slag also stabilizes the steel slag to some extent, in particular by the formation of merwinite.

In an embodiment of the method according to the present invention or according to any one of the preceding embodiments, the liquid steel slag which is solidified to produce said solidified steel slag comprises at most 15.0 wt.% MgO, preferably at most 14.0 wt.% MgO, and more preferably at most 13.0 wt.% MgO.

Higher amounts of magnesium oxide in the steel slag may cause the formation of periclase therein. Periclase has the drawback that it is difficult to hydrate. When the steel slag is used as aggregate in concrete or asphalt, the periclase contained therein can however slowly hydrate. Upon hydration of the periclase, the aggregate swell and cracks are produced in the concrete or the asphalt. Consequently, it is important to avoid the formation of periclase in the steel slag.

In an embodiment of the method according to the present invention or according to any one of the preceding embodiments, the liquid steel slag which is solidified to produce said solidified steel slag comprises $CaF_2$, in particular in an amount of between 0.5 and 9 wt.% and preferably in an amount of at least 1.0 wt.%.

The presence of calcium fluoride in the steel slag may also contribute to the stabilization of the steel slag, in particular by the formation of cuspidine. However, the method according to the present invention enables to avoid or reduce the amount of calcium fluoride and enables thus to reduce or avoid the costs of calcium fluoride additions. Fluoride is moreover toxic and its presence in the solidified steel slag is thus preferably avoided or at least limited.

In an embodiment of the method according to the present invention or according to any one of the preceding embodiments, the mainly crystalline solidified steel slag is first air cooled and is subsequently cooled by applying water onto the solidified steel slag, cooling with water being started when the average temperature of the solidified steel slag, determined as a volume weighted average, is still higher than 550°C, preferably when the average temperature of the solidified steel slag is still higher than 600°C and more preferably when the average temperature of the solidified steel slag is still higher than 650°C.

During the first cooling phase, namely the air cooling phase, phases such as merwinite, bredigite and cuspidine can be formed. The steel slag is then cooled more quickly with water to avoid the transformation of these phases in dicalcium silicate and especially also to reduce or avoid the transformation of any β-C2S into γ-C2S.

Other particularities and advantages of the invention will become apparent from the following description of some particular embodiments of the method according to the present invention. The reference numerals used in this description relate to the annexed drawings wherein:

Figure 1 illustrates the curves showing the relationship between the minimum $Al_2O_3$ contents in the final slag composition, having an MgO content of 10 wt.%, but no $CaF_2$, as a function of the basicity thereof, as defined by Equations 1 to 4, and the curves showing the relationship between the maximum $Al_2O_3$ contents in the final slag composition, having an MgO content of 10 wt.%, but no $CaF_2$, as a function of the basicity thereof, as defined by Equation 5 for different a values in this equation;
Figure 2 shows the same curves as Figure 1 but for a final slag composition having an MgO content of 5 wt.% and no $CaF_2$;
Figure 3 shows again the same curves but for a final slag composition having an MgO content of 5.0 wt.% and an $CaF_2$ content of 5.0 wt.%;
Figure 4 shows again the same curves but for a final slag composition having an MgO content of 7.9 wt.% and an $CaF_2$ content of 6.4 wt.%; and
Figure 5 shows a $CaO-SiO_2-Al_2O_3$ phase diagram, established for an MgO content of 10 wt.%, onto which lines of different basicities are indicated and lines L1 to L4 of equally stabilized compositions, having similar C2S contents in the equilibrium situation.

The present invention relates to a method for producing a mainly crystalline solidified steel slag. The mainly crystalline steel slag has in particular an amorphous content of at most 50 wt.%, preferably at most 40 wt.% and more preferably at most 30 wt.%. In general, steel slag, and in particular the steel slag produced by the method according to the present invention, has a calcium content, expressed as weight percent of the element Ca, of at least 15 wt.% or at least 20 wt.% or usually at least 25 wt.%. The solid steel slag is a calcium silicate slag which may contain different crystalline phases such as dicalcium silicate phases, calcium magnesium silicate phases and other phases. The steel slag is in particular a stainless steel slag, i.e. a steel slag generated as by-product in the production of stainless steel which contains at least iron and chromium and usually also nickel. The stainless steel may comprises further alloying elements such as for example titanium. The steel slag can in particular be an AOD (Argon Oxygen Decarburization), a VOD (Vacuum Oxygen Decarburization), an EAF (Electric Arc Furnace) or an LM (Ladle Metallurgy) slag.

In order to be able to valorise the solid steel slag as much as possible, it should contain a minimum amount of fines, in particular a minimum amount of particles smaller than 0.5 mm. Larger particles can indeed be used as fine or coarse aggregates in construction, in particular in bituminous or cementitious concretes, but the smaller particles have too high water absorption properties to be suitable for such applications. The fines are mainly the result of a disintegration of the slag which is driven by the irreversible $\beta$ to $\gamma$-C2S phase transformation causing a volume expansion of about 12%. During this phase transformation high internal stresses thus occur in the slag, as a result of which the slag disintegrates into fine particles. Depending amongst others on the magnesium oxide content of the steel slag, dicalcium silicate phases can be formed in the steel slag when the steel slag has a basicity, defined as the ratio between its calcium content, expressed as wt.% CaO, and its silicon content, expressed as wt.% $SiO_2$, which is higher than approximately 1.02 when its MgO content is about 5 wt.% or which is higher than approximately 1.14 when its MgO content is about 10 wt.%.

In the method according to the present invention, liquid steel slag is produced on top of molten steel. The steel slag contains at least CaO, $SiO_2$, MgO and $Al_2O_3$. Usually, it also contains $CaF_2$ which is added to reduce the viscosity of the steel slag. In the method of the present invention, the addition of $CaF_2$ is however preferably avoided or reduced since, if possible, the presence of fluorine in the solidified steel slag should preferably be avoided or reduced in view of the possible toxic effects of fluorine. In the method according to the present invention relatively large amounts of aluminium are indeed provided in the liquid steel slag which also reduce the viscosity thereof.

The liquid steel slag which is present on top of the molten steel, and which is separated therefrom in a next step, has a first basicity $B_1$. This basicity is defined as the ratio between the CaO content and the $SiO_2$ content of the steel slag. The concentration of the different elements such as Ca, Si, Mg and Al in the slag can be measured for example by XRF or ICP. Usually, they are then converted in corresponding amounts of CaO, $SiO_2$, MgO and $Al_2O_3$. However, in accordance with the present invention, it is important to define the basicity of the slag based on the real CaO content thereof, not including for example $CaF_2$. Compounds such as $CaF_2$ are indeed not a constituent of C2S phases. Instead, $CaF_2$ is present in particular in other phases, such as cuspidine ($3CaO.CaF_2.2SiO_2$), which may assist in stabilizing the steel slag. In this respect, the steel slag preferably comprises some $CaF_2$, in particular in an amount of between 0.5 and 9 wt.% and preferably in an amount of at least 1.0 wt.%. Otherwise, it should be stabilized more, in particular with aluminium.

The basicity of the steel slag produced on top of the molten steel is in particular higher than 1.2, more particularly higher than 1.3 or even higher than 1.4. Usually, it is lower than 2.5. The basicity of the steel slag depends i.a. on the phase of the steel production. Generally, the basicity of the steel slag is lower in the first phase, in the EAF, and is higher in the subsequent phases, namely in the AOD or VOD furnace and in the ladle furnace used for the continuous casting of the liquid steel.

During the production of the steel, the chemistry of the liquid steel slag changes, for example by the release of gases such as carbon dioxide. Moreover, some elements present in the molten steel, such as iron, chromium, titanium, vanadium and molybdenum oxides are taken up as impurities in the liquid steel slag. These elements will also determine the crystalline phases which will be formed during the solidification of the liquid steel slag.

In the method according to the present invention, the steel slag is stabilized chemically in two ways, namely by providing aluminium in the liquid steel slag and by lowering the basicity thereof. The required amount of aluminium is at least partially provided in the liquid steel slag which is produced on top of the molten steel whilst the basicity of the steel slag is reduced after the liquid steel slag has been separated/removed from the molten steel. Metallic aluminium, or other aluminium compounds such as aluminium oxides or hydroxides, may indeed be used in relatively large amounts to produce the liquid steel slag on top of the molten steel whilst lowering the basicity of the steel slag should be done afterwards since it may have an effect on the steel quality (for example deoxidation capability of slag increases with the increase of basicity) and also on the refractory lining.

At least one first aluminium rich material is thus used to produce the liquid steel slag on top of the molten steel. This first aluminium rich material has preferably an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$. The first aluminium rich material may contain metallic aluminium and/or trivalent aluminium.

Since when added to the steel furnace, in particular to an EAF, metallic aluminium can reduce metals such as iron and especially also chromium, the aluminium is preferably added to the steel furnace at least partially in the form of metallic aluminium. Moreover, the oxidation of metallic aluminium also produces some additional heat. The first aluminium rich material therefore preferably contains metallic aluminium and preferably contains at least 60 wt.%, more preferably at least 70 wt.% and most preferably at least 80 wt.% of metallic aluminium, expressed as weight percent Al. The first aluminium rich material may however also contain non-metallic aluminium or a combination of non-metallic and metallic aluminium. Metallic aluminium will for example usually contain some oxidised aluminium. Moreover, other by-products such as aluminium dross can be used. The aluminium dross may still contain some metallic aluminium apart from the aluminium oxides/hydroxides or it is also possible to use the aluminium oxides/hydroxides recycled from aluminium dross.

**EP 3 901 289 B1**

In an electric arc furnace, the first aluminium rich material is preferably added thereto before introducing the solid steel forming constituents, such as steel scrap, therein. In this way, the aluminium is effectively mixed with the liquid steel. Use can for example be made of aluminium scrap.

When added to the AOD or VOD furnace, the first aluminium rich material is added preferably to the transfer ladle used to transfer the molten steel from the EAF to the AOD or VOD furnace. An effective mixing with the molten steel slag and a complete melting of the aluminium rich material and mixing thereof with the other slag components is thus achieved.

Also when added to the finishing ladle for ladle metallurgy, where the steel chemistry can be fine-tuned by adding a final amount of alloying elements and which is used for the continuous casting of the liquid steel, the first aluminium rich material is added preferably to the transfer ladle used to transfer the molten steel from the AOD or VOD furnace to the final ladle furnace.

In addition to the first aluminium rich material, which is used to produce the liquid slag on top of the molten steel, it is also possible to add at least one second aluminium rich material to the liquid steel slag after it has been separated from the molten steel. This second aluminium rich material preferably also has an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$. It preferably also contains metallic aluminium. The metallic aluminium content of the second aluminium rich material comprises in particular at least 60 wt.% and more in particular at least 70 wt.% or even at least 80 wt.% of metallic aluminium, expressed as weight percent Al.

An advantage of adding metallic aluminium is that the oxidation thereof produces heat so that the addition thereof to the liquid slag doesn't cool it down of at least to a smaller extent. Moreover, by the addition of metallic aluminium, foaming of the liquid slag during the tapping thereof can be avoided or reduced. In order to obtain a good mixing, the second aluminium rich material is preferably injected into the liquid steel slag during tapping of the liquid steel slag into a slag pot.

Although less preferred, the second aluminium rich material may also contain non-metallic aluminium or a combination of non-metallic and metallic aluminium. Metallic aluminium will for example usually contain some oxidised aluminium. Moreover, other by-products such as aluminium dross can be used. The aluminium dross may still contain some metallic aluminium apart from the aluminium oxides/hydroxides or it is also possible to use the aluminium oxides/hydroxides recycled from aluminium dross.

Apart from providing the required amount of aluminium oxide in the liquid steel slag, the basicity $B_1$ of the liquid steel slag produced on top of the molten steel is lowered at least partially by dissolving at least one low basicity material in the liquid steel slag which has been separated from the molten steel. In case a second aluminium rich material is used which has a lower basicity than the first basicity $B_1$ of the liquid steel slag, the basicity of the liquid steel slag is already reduced to some extent by the addition of the second aluminium rich material. Valoxy®, which is a product containing the aluminium oxides/hydroxides recycled from aluminium dross, contains for example about 1.9 wt.% of CaO and 7.2 wt.% of $SiO_2$, or has in other words a basicity of about 0.26. The addition thereof to the liquid steel slag will have an effect on the basicity of the steel slag, but only a small effect due to the small $SiO_2$ content of Valoxy®.

In the method according to the present invention, the basicity of the liquid steel slag is lowered at least partially by dissolving at least one low basicity material therein. The low basicity material contains at least 50 wt% of $SiO_2$. If it contains no CaO, it has a further basicity, defined as the weight ratio between its CaO content and its $SiO_2$ content, which is equal to zero. It may however also contain some CaO but only in a relatively small amount, namely in such an amount the basicity of the low basicity material remains smaller than 0.30.

The low basicity material may comprise for example fly ash, in particular class F fly ash. Class F fly ash comprises less than 10 wt.% of CaO. It comprises for example about 55 wt.% of $SiO_2$ and it usually also contains $Al_2O_3$, for example in an amount of about 26 wt.%. The low basicity material may thus also comprise some aluminium which contributes to the final aluminium content of the steel slag.

Another low basicity material which may be used is silica fume. Silica fume has a high $SiO_2$ content, in particular in the range of 85 to 98 wt.%.

Preferably, the low basicity material comprises glass, in particular glass cullet. In general, the low basicity material, such as glass, is preferably mainly amorphous. Amorphous materials have in general a lower melting point so that they can be dissolved more easily in the liquid slag. Glass starts to melt for example usually at a temperature below 800°C and is completely molten at a temperature of about 1000°C.

In accordance with the present invention, only a relatively small amount of the low basicity material (or materials) is added to the liquid steel slag which is separated from the molten steel. The difference between the first basicity $B_1$ of the liquid steel slag which is being separated from the molten steel and the second basicity $B_2$, i.e. the basicity of the steel slag which is being solidified or in other words the basicity of the solidified steel slag itself, should indeed be smaller than 0.2. A minimum amount of low basicity material (or materials) should however be added, namely an amount such that the difference between the first basicity $B_1$ and the second basicity $B_2$ is larger than 0.02.

After having lowered the basicity of the liquid steel slag to said second basicity $B_2$, it is solidified by cooling it down to produce the solidified liquid steel slag. The liquid steel slag is not quenched with water or air, but it is cooled down more slowly, so that it still remains mainly crystalline even when it is cooled with water to avoid or reduce the transformation of any

9

beta-dicalcium silicate into gamma-dicalcium silicate.

In accordance with the present invention, a predetermined minimum amount of aluminium should be provided in the liquid steel slag which is solidified, i.e. in the solidified steel slag. As explained hereabove, this final steel slag has a second basicity $B_2$. It also has a certain MgO content. Additionally, it may contain $CaF_2$ but is may also be free of $CaF_2$. The final slag should have an $Al_2O_3$ content of $A$ wt.%, which is determined by the following equation 1:

$$A \geq -5.51 * (B_2 - M * 0.022 - F * 0.011)^2 + 26.67 * (B_2 - M * 0.022 - F * 0.011) - 23 \qquad \text{(equation 1)}.$$

In this equation:

$A$ is the $Al_2O_3$ content, expressed in weight percent, of the solidified steel slag;
M is the MgO content, expressed in weight percent, of the solidified steel slag;
$F$ is the $CaF_2$ content, expressed in weight percent, of the solidified steel slag, with $F$ being equal to zero when the solidified steel slag is free of $CaF_2$; and
$B_2$ is the second basicity, i.e. the basicity of the solidified steel slag.

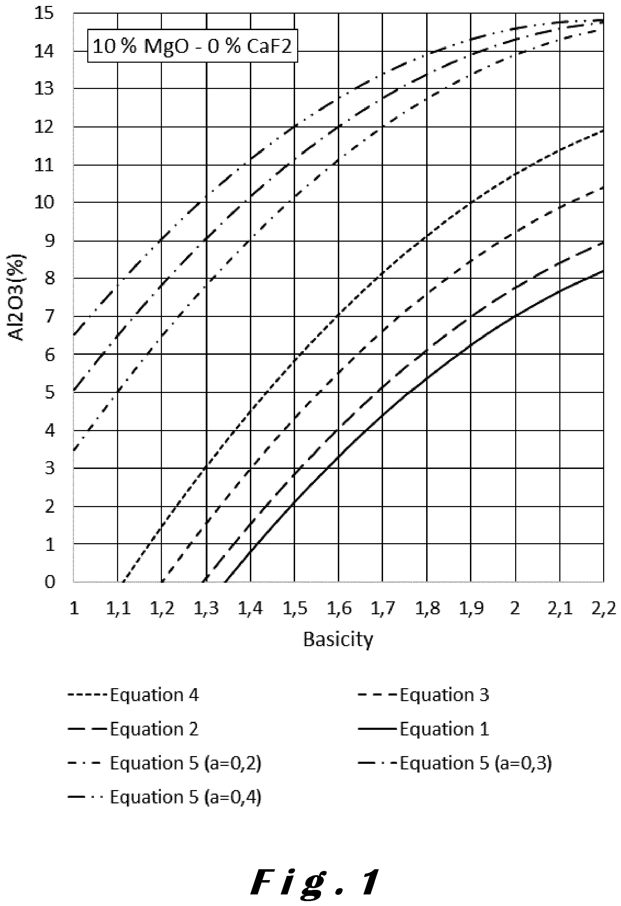

The curve of this equation 1 is indicated in Figure 1 for an MgO content of 10 wt.% and for 0 wt.% of $CaF_2$. It can be seen that for a basicity of about 1.34 no $Al_2O_3$ has to be present in the steel slag and that for higher basicities the amount of $Al_2O_3$ that has to be present in the steel slag increases quickly and subsequently, for higher basicities, more slowly.

For the minimum $Al_2O_3$ amounts, as determined by equation 1, an amount of C2S will be present in the solidified steel slag when it is cooled down by a slow cooling process, for example an amount which may be in the order of magnitude of about 25 wt.%. As described in WO 2015/144903 the formation of C2S can however be reduced by an appropriate cooling process, wherein, in a first phase, the solidified slag is kept at a relatively high temperature to allow the formation of calcium magnesium silicate phases and wherein, in a second phase, the solidified slag is cooled down more rapidly by means of water so that the calcium magnesium silicates do not have the time to convert into dicalcium silicate. In the method according to the present invention, the solidified steel slag is therefore preferably first air cooled and is subsequently further cooled by applying water onto the solidified steel slag. Cooling with water is preferably started when the average temperature of the solidified steel slag, determined as a volume weighted average, is still higher than 550°C, preferably when the average temperature of the solidified steel slag is still higher than 600°C and more preferably when the average temperature of the solidified steel slag is still higher than 650°C. In this way the transformation of calcium magnesium silicates into dicalcium silicate and also the transformation of beta to gamma dicalcium silicate can be reduced.

Even if some γ-C2S is formed, the presence of a small amount of γ-C2S, for example an amount of less than 4 wt.%, may not cause the disintegration of the slag. Moreover, it is not essential that the formation of fines is completely avoided. Instead, some fines might still be produced although the formation of fines is preferably to be minimized.

In order to be able to reduce, or even avoid, the formation of fines further, a larger amount of $Al_2O_3$ is preferably provided in the solidified steel slag. The $Al_2O_3$ content in the solidified steel slag is more particularly preferably determined by the following equation 2:

$$A \geq -5.51 * (B_2 - M * 0.022 - F * 0.011)^2 + 26.67 * (B_2 - M * 0.022 - F * 0.011) - 22.26 \qquad \text{(equation 2)}.$$

The curve of this equation is also indicated in Figure 1, for 10 wt.% of MgO and 0 wt.% of $CaF_2$. Due to the higher $Al_2O_3$ content, less C2S will be formed when the steel slag is slowly cooled down, for example an amount in the order of magnitude of about 20 wt.%.

More preferably, the $Al_2O_3$ content in the solidified steel slag is even higher and is more particularly determined by the following equation 3:

$$A \geq -5.68 * (B_2 - M * 0.022 - F * 0.011)^2 + 27.21 * (B_2 - M * 0.022 - F * 0.011) - 21.2 \qquad \text{(equation 3)}.$$

When the steel slag is cooled down slowly, it can be expected that for the minimum $Al_2O_3$ contents as determined by equation 3 the C2S content thereof will be in the order of magnitude of about 10 wt.%.

The $Al_2O_3$ content in the solidified steel slag can even be higher and may in particular be determined by the following equation 4:

$$A \geq -5.82 * (B_2 - M * 0.022 - F * 0.011)^2 + 27.64 * (B_2 - M * 0.022 - F * 0.011) - 20 \qquad \text{(equation 4)}.$$

When the steel slag is cooled down slowly, it can be expected that for the minimum $Al_2O_3$ contents as determined by equation 4 the C2S content thereof will be in the order of magnitude of about 0 wt.%.

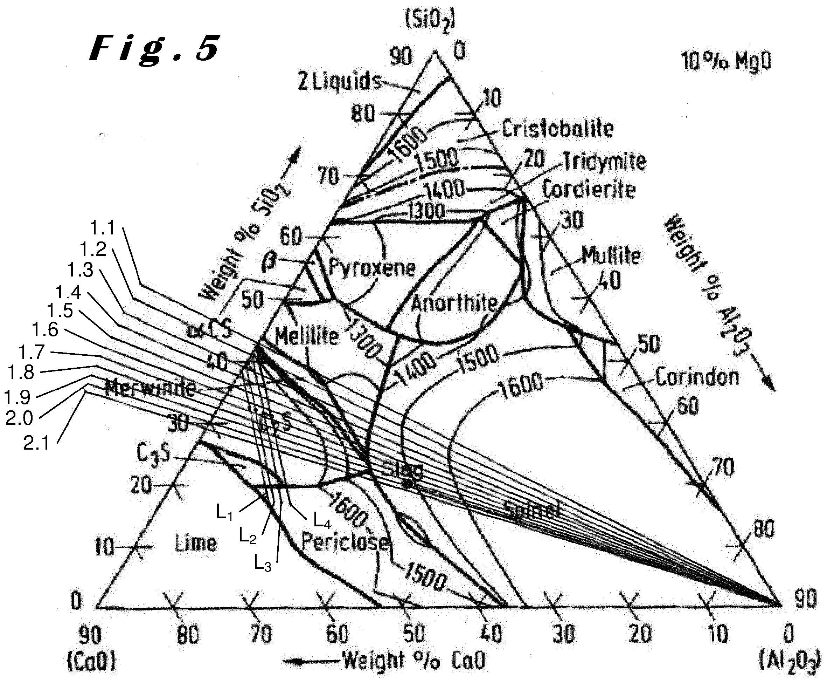

The curves of equations 2, 3 and 4 are also indicated in Figure 1 for an MgO content of 10 wt.% and for 0 wt.% of $CaF_2$. It can be seen that for a basicity of about 1.11 no $Al_2O_3$ has to be present in the steel slag to avoid, in accordance with equation 4, any C2S formation. In the $CaO-SiO_2-Al_2O_3$ phase diagram, established for an MgO content of 10 wt.%, (see Figure 5) it can indeed be seen that for 0 wt.% of $Al_2O_3$ the border between the C2S area and the merwinite area is at 42.2 wt.% of $SiO_2$ or, recalculated, at a basicity of 1.13. With the lever rule, it can be calculated, based on the phase diagram of Figure 5 that, for 0 wt.% of $Al_2O_3$, the slowly cooled down slag material would contain about 10 wt.% C2S at a basicity of 1.22, about 20 wt.% C2S at a basicity of 1.32, and about 25 wt.% C2S at a basicity of 1.37.

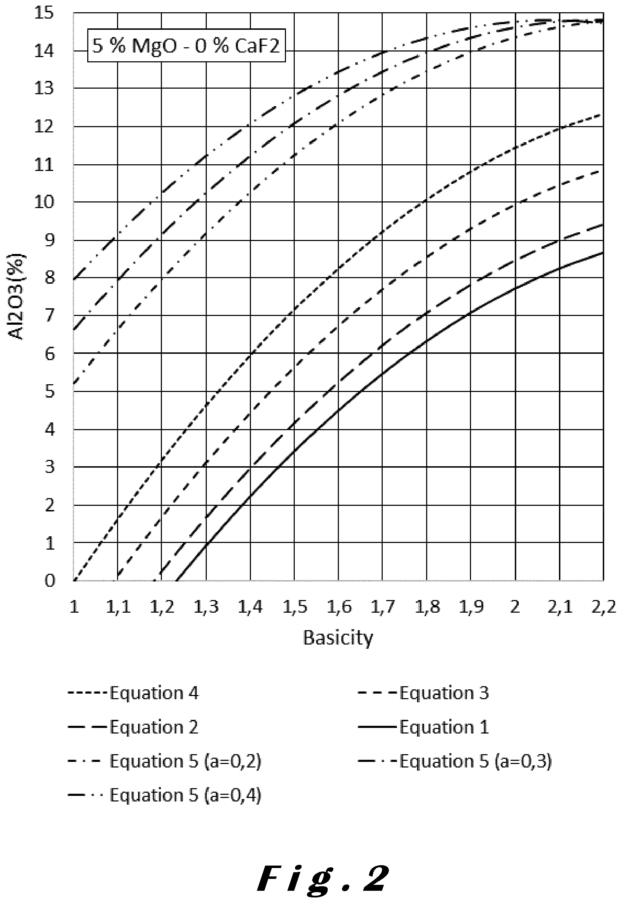

In Figure 2, the curves of equations 1 to 4 are indicated for an MgO content of 5 wt.% and for 0 wt.% of $CaF_2$. These curves are shifted to lower basicities, more particularly over a distance along the X-axis corresponding to 0.11 basicity units (= 5 x 0.022). In the known $CaO-SiO_2-Al_2O_3$ phase diagram, established for an MgO content of 5 wt.%, (not shown in the Figures) it can indeed be seen that for 0 wt.% of $Al_2O_3$ the border between the C2S area and the merwinite area is at 44.5 wt.% of $SiO_2$ or, recalculated, at a basicity of 1.02.

For higher MgO contents, the merwinite area in the phase diagram is larger so that the border between the merwinite area and the C2S is shifted to higher basicities. The liquid steel slag which is solidified to produce said solidified steel slag comprises therefore preferably at least 4.0 wt.% MgO, more preferably at least 5.0 wt.% MgO, and most preferably at least 6.0 wt.% MgO. However, since the formation of periclase it to be avoided as much as possible in the solidified steel slag, in view of the deleterious swelling properties thereof, the liquid steel slag which is solidified to produce said solidified steel slag preferably comprises at most 15.0 wt.% MgO, more preferably at most 14.0 wt.% MgO, and most preferably at most 13.0 wt.% MgO.

Based on Slag mineralogy calculations it was found that the main stabilizing phase formed when adding more aluminium oxide to the slag are merwinite and cuspidine, if $CaF_2$ is present in the slag. Since the difference between merwinite and cuspidine consists only in the fact that either MgO or $CaF_2$ is present, the equations of the present invention have been established based on a same stabilizing effect of cuspidine and merwinite. The effect of the content by weight of $CaF_2$ was however only half the effect of the content by weight of MgO since the molecular weight of $CaF_2$ is twice as large as the molecular weight of $CaF_2$.

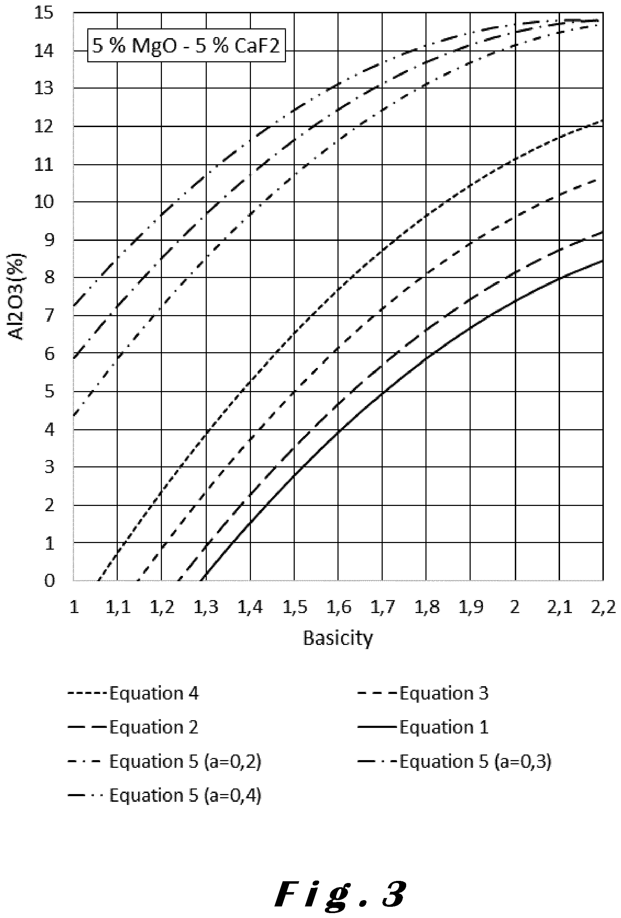

The curves of the different equations are shown, for an MgO content of 5 wt.% and an $CaF_2$ content of 5 wt.%, in Figure 3. It can be seen that these curves are in between the curves for 5 wt.% of MgO (with no $CaF_2$) and for 10 wt.% of MgO (with no $CaF_2$).

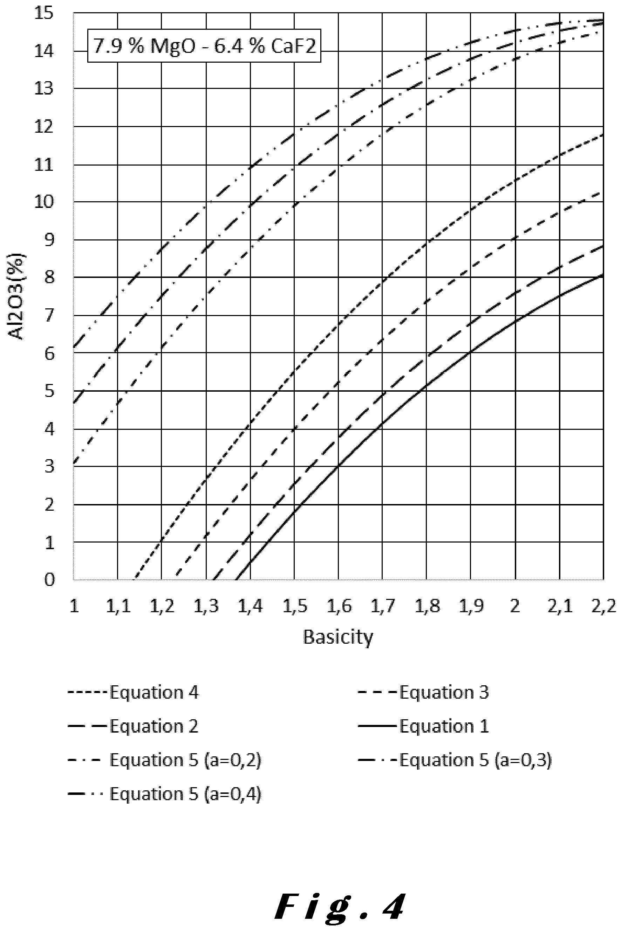

In Figure 4 the curves of the different equations are shown for an MgO content of 7.9 wt.% and an $CaF_2$ content of 6.4 wt.%. These curves correspond substantially to the curves established for an MgO content of 10 wt.% and with no $CaF_2$ since the effect of the content by weight of $CaF_2$ was indeed considered to be equal to half the effect of the content by weight of MgO. The curves are more particularly identical to the curves established for an MgO content of 11.1 wt.% with no $CaF_2$.

The above described equations have not only been established in accordance with the invention on the $CaO-SiO_2-Al_2O_3$ phase diagram with 10 wt.% of MgO but especially also on practical data with existing steel slags and on slag mineralogy calculations starting from a more complex slag composition with different aluminium additions.

These calculations were made for an average AOD slag having the following composition:

Table 1: Composition (in wt.%) of the AOD slag used in the FactSage Slag-A model calculations

| CaO | $SiO_2$ | $Al_2O_3$ | $TiO_2$ | MgO | $CaF_2$ | Basicity |
|-----|---------|-----------|---------|-----|---------|----------|
| 51.9 | 30.6 | 1.7 | 1.1 | 7.8 | 6.9 | 1.70 |

Calculations were made on the equilibrium mineralogy to be expected at different temperatures with the FactSage Slag-A model with manual addition of bredigite ($Ca_7MgSi_4O_{16}$), with a stability range of about 900-1300°C.

The calculations were made for different amounts of an aluminium rich material added to the steel slag. The composition of this aluminium rich material was similar to Valoxy® and is given in Table 2.

Table 2: Composition (in wt.%) of the aluminium rich material used in the FactSage Slag-A model calculations

| CaO | $SiO_2$ | $Al_2O_3$ | MgO | Rest | Basicity |
|-----|---------|-----------|-----|------|----------|
| 1.9 | 7.2 | 75.8 | 9.2 | 5.9 | 0.26 |

The calculations showed that by the addition of the aluminium rich material, in amounts of 0 to 10%, especially the amounts of $3CaO.MgO.2SiO_2$ (merwinite) and $3CaO.MgO.2Al_2O_3$ increased resulting in a substantially corresponding decrease in the amount of $2CaO.SiO_2$ (dicalcium silicate). A linear relationship was found between the amount of the aluminium rich material added to the slag and the C2S content thereof. This linear relationship corresponded substantially to the following equation 6:

$$wt.\% \, C2S = 40 - 5 * V \text{ (equation 6)},$$

wherein V is the amount, in percent by weight, of the aluminium rich material in the mixture of slag and aluminium rich material.

To establish the equations 1 to 4, the points corresponding to the slag/aluminium rich material mixtures which gave 0; 10; 20 and 25 wt.% C2S by the FactSage calculations, respectively for aluminium rich material contents of 8, 6, 4 and 3 wt.% in the mixture, were indicated on the phase diagram of Figure 5. These mixtures respectively contained about 7.9 wt.% of MgO and about 6.4 to 6.6 wt.% of $CaF_2$, and were considered to have a similar stabilizing effect as 10 wt.% of MgO and no $CaF_2$. The different points are entirely situated in the C2S area but the phase diagram of Figure 5 does not take into account the other phases which are present due to the more complex composition of the steel slag compared to the $CaO$-$SiO_2$-$Al_2O_3$-$MgO$ compositions indicated in the phase diagram of Figure 5. The lines L1, L2, L3 and L4 were drawn, respectively for C2S amounts of 25, 20, 10 and 0 wt.% and the $Al_2O_3$ contents were determined for each of these lines for different basicities, i.e. at the intersections of the lines L1, L2, L3 and L4 with the lines of the different basicities.

For 0 wt.% C2S line L4 was drawn through the point established by the FactSage calculations for 0 wt% C2S (i.e. basicity 1.67 and $Al_2O_3$ content of 7.63 obtained with 8 wt.% of the aluminium rich material in the slag mixture) and by the intersection of the borderline between the C2S area and the merwinite area with the $SiO_2$ axis for 0 wt.% $Al_2O_3$.

The minimum amounts of $Al_2O_3$ which are to be provided in accordance with the invention are defined by equation 1. The minimum $Al_2O_3$ amounts are essential in the method according to the invention to enable to stabilize the steel slag sufficiently with only the relatively small amounts of low basicity material which are added to the steel slag in accordance with the present invention.

When producing steel, the basicity of the slag in the different furnaces is selected in view of the basicity required for the steel production process. Also aluminium is usually used to some extent for the production of the steel. In the second place, the present invention is directed to a method which enables to obtain as by-product, in an economical way and with no or only a minimum effect on the steel quality, a steel slag which is better stabilized.

First of all the basicity of the steel slag is lowered after the steel slag has been separated from the molten metal. Usually low basicity materials which have no cost or only a low cost, such as glass cullet, are available to achieve this basicity reduction. In accordance with the invention, the basicity is reduced with 0.02 to 0.2. Preferably, the basicity reduction is smaller than 0.17, more preferably smaller than 0.14 and most preferably smaller than 0.11, but larger than 0.04, preferably larger than 0.06.

The amount of low basicity material will also be determined in practice in view of the technical possibilities to add and dissolve the low basicity material in the liquid steel slag. This may depend for example on the nature (in particular the melting point) of the low basicity material, the temperature of the liquid steel slag and also on the installation which is provided to inject or otherwise dissolve the low basicity material in the liquid steel slag. Preferably, the at least one low basicity material is added in an amount of less than 5.0 %, preferably in an amount of less than 4.0 % and more preferably in an amount of less than 3.0 % of the weight of the molten steel slag which is separated from the molten steel.

When the method of the present invention is used to replace the use of borates for stabilizing the steel, slag the existing installations for injecting the borates can be used. These borates were for example injected in an amount of about 2.5 % of the weight of the molten steel slag.

Based on the basicity of the final slag mixture and on the MgO and $CaF_2$ content thereof, the minimum amount of $Al_2O_3$ which has to be provided in the final slag composition can then be determined based on equation 1, 2, 3 or 4. The required $Al_2O_3$ content is achieved by the aluminium which was already provided in the steel slag for the steel production process, and by the additional amount of aluminium rich material which is provided to the steel slag on top of the molten steel and/or in the steel slag which is separated therefrom. The additional amount of aluminium rich material may modify the final slag composition, in particular its basicity and its MgO and $CaF_2$ content, so that it may be necessary to recalculate the amount of aluminium rich material(s) required to obtain a stabilized slag composition in accordance with the equations of the present invention. These equations relate indeed to the final slag composition, i.e. to the composition of the solidified slag.

In the method of the present invention, the $Al_2O_3$ content is preferably not too high, in particular since the addition of the aluminium rich materials involves some costs. Usually, these costs are higher than the cost of the low basicity material additions. Preferably, the amount of $Al_2O_3$ provided in the solidified steel slag is limited in accordance with the following equation:

$$A \leq -5.82 * (B_2 - M * 0.022 - F * 0.011 + a)^2 + 27.64 * (B_2 - M * 0.022 - F * 0.011 + a) - 18 \qquad \text{(equation 5)},$$

wherein a is equal to 0.40, preferably equal to 0.30 and more preferably equal to 0.20.

The preferred maximum amounts of $Al_2O_3$ in the solidified steel slag are therefore also a function of the MgO content and of the basicity thereof. The curves of equation 5 have also been indicated in Figures 1 to 4 for the respective MgO and $CaF_2$ contents.

## Examples

An AOD steel slag (Slag), having the composition as indicated in Table 1, was stabilized with an aluminium rich material (Al rich) having the composition as indicated in Table 2 and with glass cullet (Glass) having the composition as indicated in the following Table 3.

Table 3: Composition (in wt.%) of the glass culled used in the examples.

| CaO | SiO$_2$ | Al$_2$O$_3$ | Fe$_2$O$_3$ | MgO | Na$_2$O | K$_2$O | Basicity |
|-----|---------|-------------|-------------|-----|---------|--------|----------|
| 7.15 | 70.49 | 2.72 | 0.29 | 3.82 | 12.2 | 2.76 | 0.10 |

Table 4: Slag/aluminium rich material/glass mixtures and final compositions and stabilities of the different examples.

| | Ex. 1 | Ex. 2 | Ex. 3 | Ex. 4 | Ex. 5 | Comp. Ex. |
|---|---|---|---|---|---|---|
| Formulation (in parts by weight per 100 parts by weight) | | | | | | |
| Slag | 95 | 92.5 | 90.0 | 92.5 | 91.5 | 97.0 |
| Al rich | 2.5 | 5.0 | 7.5 | 3.0 | 4.0 | 3.0 |
| Bas. $B_1$ | 1.69 | 1.68 | 1.67 | 1.68 | 1.68 | 1.69 |
| Glass | 2.5 | 2.5 | 2.5 | 4.5 | 4.5 | 0.0 |
| Final slag composition (in wt.%) | | | | | | |
| Bas. $B_2$ | 1.60 | 1.59 | 1.58 | 1.53 | 1.52 | 1.69 |
| $B_1$-$B_2$ | 0.09 | 0.09 | 0.09 | 0.15 | 0.16 | 0.0 |
| MgO | 7.74 | 7.77 | 7.81 | 7.66 | 7.68 | 7.84 |
| CaF$_2$ | 6.56 | 6.38 | 6.21 | 6.38 | 6.31 | 6.69 |
| Al$_2$O$_3$ | 3.58 | 5.43 | 7.28 | 3.97 | 4.71 | 3.92 |
| Minimum Al$_2$O$_3$ contents (in wt.%) according to the equations | | | | | | |
| Eq. 1 | 3.1 | 2.9 | 2.8 | 2.3 | 2.1 | 4.0 |
| Eq. 2 | 3.8 | 3.7 | 3.6 | 3.0 | 2.9 | 4.8 |
| Eq. 3 | 5.3 | 5.2 | 5.1 | 4.5 | 4.3 | 6.2 |
| Eq. 4 | 6.8 | 6.7 | 6.6 | 6.0 | 5.9 | 7.8 |
| Stabilized | + | +++ | ++++ | ++ | +++ | - |

In these theoretical examples, an amount of the aluminium rich material was added first to the slag. In practice, the aluminium rich material would have been used to produce the slag on top of the molten steel. This would result in the first basicities $B_1$ as indicated for the different examples in Table 4. The amounts of glass cullet which are dissolved in the liquid slag removed from the molten steel are also indicated for the different examples in Table 4, as well as the resulting second basicities $B_2$.

The MgO content, the $CaF_2$ content and the $Al_2O_3$ content of the final slag compositions was calculated and the minimum $Al_2O_3$ contents, as respectively determined by Equations 1 to 4, were also indicated. A "+" is indicated in the stabilization row when Equation 1 is met, a "++" when Equation 2 is met, a "+++" when Equation 3 is met and a "++++" when Equation 4 is met. When none of the equations is met, this is indicated, for the comparative example, with a "-".

It can be seen that the aluminium rich material is more effective to stabilize the slag. It can however also be seen that the required amount of the aluminium rich material can be reduced by the use of a cheaper low basicity material (glass cullet). A considerable saving of the aluminium rich material can be achieved with amounts of the low basicity material which can easily be dosed in the liquid steel slag after it has been removed from the molten steel.

**Claims**

1. A method for producing a mainly crystalline solidified steel slag, which method comprises the steps of:

   - producing a liquid steel slag on top of molten steel, which liquid steel slag is composed to contain at least CaO, $SiO_2$, MgO and $Al_2O_3$ and to have a first basicity ($B_1$), defined as the weight ratio between the CaO content of said liquid steel slag and the $SiO_2$ content thereof, which is higher than 1.2;
   - separating said liquid steel slag from said molten steel;
   - lowering the basicity of the liquid steel slag separated from the molten steel from said first basicity ($B_1$) to a second basicity ($B_2$) at least partially by dissolving at least one low basicity material in the liquid steel slag, which low basicity material contains at least 50 wt% of $SiO_2$ and has a further basicity, defined as the weight ratio between its CaO content and its $SiO_2$ content, which is equal to zero when it is free of CaO or which is smaller than 0.30 when it contains CaO; and
   - solidifying the liquid steel slag having said second basicity ($B_2$) by cooling it down to produce said mainly crystalline solidified steel slag,

   **characterised in that**
   the difference between said first basicity ($B_1$) and said second basicity ($B_2$) is comprised between 0.02 and 0.2 and the liquid steel slag which is solidified to produce said solidified steel slag is composed to contain $A$ wt.% of $Al_2O_3$, with $A$ being defined by the following equation (1):

   $$A \geq -5.51 * (B_2 - M * 0.022 - F * 0.011)^2 + 26.67 * (B_2 - M * 0.022 - F * 0.011) - 23 \qquad \text{(equation 1)};$$

   wherein:

   $A$ is the $Al_2O_3$ content, expressed in weight percent, of the solidified steel slag;
   $M$ is the MgO content, expressed in weight percent, of the solidified steel slag;
   $F$ is the $CaF_2$ content, expressed in weight percent, of the solidified steel slag, with $F$ being equal to zero when the solidified steel slag is free of $CaF_2$; and
   $B_2$ is said second basicity of the solidified steel slag.

2. The method according to claim 1, **characterised in that** the difference between said first basicity ($B_1$) and said second basicity ($B_2$) is smaller than 0.17, preferably smaller than 0.14 and more preferably smaller than 0.11.

3. The method according to claim 1 or 2, **characterised in that** the difference between said first basicity ($B_1$) and said second basicity ($B_2$) is larger than 0.04, preferably larger than 0.06.

4. The method according to any one of the claims 1 to 3, **characterised in that** $A$ is defined by the following equation (2):

   $$A \geq -5.51 * (B_2 - M * 0.022 - F * 0.011)^2 + 26.67 * (B_2 - M * 0.022 - F * 0.011) - 22.26 \qquad \text{(equation 2)}.$$

5. The method according to claim 4, **characterised in that** $A$ is defined by the following equation (3):

   $$A \geq -5.68 * (B_2 - M * 0.022 - F * 0.011)^2 + 27.21 * (B_2 - M * 0.022 - F * 0.011) - 21.2 \qquad \text{(equation 3)};$$

   and preferably by the following equation (4):

   $$A \geq -5.82 * (B_2 - M * 0.022 - F * 0.011)^2 + 27.64 * (B_2 - M * 0.022 - F * 0.011) - 20 \qquad \text{(equation 4)}.$$

6. The method according to any one of the claims 1 to 5, **characterised in that** $A$ is defined by the following equation (5):

   $$A \leq -5.82 * (B_2 - M * 0.022 - F * 0.011 + a)^2 + 27.64 * (B_2 - M * 0.022 - F * 0.011 + a) - 18 \qquad \text{(equation 5)},$$

   wherein a is equal to 0.40, preferably equal to 0.30 and more preferably equal to 0.20.

7. The method according to any one of the claims 1 to 6, **characterised in that** at least one first aluminium rich material is used to produce said liquid steel slag on top of the molten steel, which first aluminium rich material has an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$.

8. The method according to claim 7, **characterised in that** said first aluminium rich material contains metallic aluminium and/or trivalent aluminium, and comprises preferably aluminium dross and/or at least aluminium oxides and/or hydroxides recycled from aluminium dross.

9. The method according to claim 8, **characterised in that** said first aluminium rich material contains metallic aluminium and preferably contains at least 60 wt.%, more preferably at least 70 wt.% and most preferably at least 80 wt.% of metallic aluminium, expressed as weight percent Al.

10. The method according to any one of the claims 1 to 9, **characterised in that** at least one second aluminium rich material, which has an aluminium content, expressed in percent by weight of $Al_2O_3$, of at least 40 wt.% $Al_2O_3$, preferably of at least 50 wt.% $Al_2O_3$ and more preferably of at least 60 wt.% $Al_2O_3$, is added to the liquid steel slag separated from the molten steel.

11. The method according to claim 10, **characterised in that** said second aluminium rich material contains metallic aluminium and preferably contains at least 60 wt.%, more preferably at least 70 wt.% and most preferably at least 80 wt.% of metallic aluminium, expressed as weight percent Al.

12. The method according to claim 10 or 11, **characterised in that** said second aluminium rich material is injected at least partially into the liquid steel slag during tapping of the liquid steel slag into a slag pot.

13. The method according to any one of the claims 1 to 12, **characterised in that** said first basicity ($B_1$) is higher than 1.3 and in particular higher than 1.4.

14. The method according to any one of the claims 1 to 13, **characterised in that** said liquid steel slag is an EAF stainless steel slag produced in an electric arc furnace.

15. The method according to any one of the claims 1 to 13, **characterised in that** said liquid steel slag is an AOD stainless steel slag produced in an argon oxygen decarburization furnace.

16. The method according to any one of the claims 1 to 13, **characterised in that** said liquid steel slag is an LM stainless steel slag produced in a ladle furnace.

17. The method according to any one of the claims 1 to 16, **characterised in that** said at least one low basicity material is added in an amount of less than 5.0 %, preferably in an amount of less than 4.0 % and more preferably in an amount of less than 3.0 % of the weight of the molten steel slag which is separated from the molten steel.

18. The method according to any one of the claims 1 to 17, **characterised in that** the liquid steel slag which is solidified to produce said solidified steel slag comprises at least 4.0 wt.% MgO, preferably at least 5.0 wt.% MgO, and more preferably at least 6.0 wt.% MgO.

19. The method according to any one of the claims 1 to 18, **characterised in that** the liquid steel slag which is solidified to produce said solidified steel slag comprises at most 15.0 wt.% MgO, preferably at most 14.0 wt.% MgO, and more preferably at most 13.0 wt.% MgO.

20. The method according to any one of the claims 1 to 19, **characterised in that** the liquid steel slag which is solidified to produce said solidified steel slag comprises $CaF_2$, in particular in an amount of between 0.5 and 9 wt.% and preferably in an amount of at least 1.0 wt.%.

21. The method according to any one of the claims 1 to 20, **characterised in that** the mainly crystalline solidified steel slag is first air cooled and is subsequently cooled by applying water onto the solidified steel slag, cooling with water being started when the average temperature of the solidified steel slag, determined as a volume weighted average, is still higher than 550°C, preferably when the average temperature of the solidified steel slag is still higher than 600°C and more preferably when the average temperature of the solidified steel slag is still higher than 650°C.

**Patentansprüche**

1.  Ein Verfahren zur Herstellung einer überwiegend kristallinen erstarrten Stahlschlacke, wobei dieses Verfahren die folgenden Schritte umfasst:

    - Herstellung einer flüssigen Stahlschlacke auf geschmolzenem Stahl, wobei diese flüssige Stahlschlacke zusammengesetzt ist, um zumindest CaO, $SiO_2$, MgO und $Al_2O_3$ zu enthalten und eine erste Basizität ($B_1$) zu haben, definiert als das Gewichtsverhältnis zwischen dem CaO-Gehalt der erwähnten flüssigen Stahlschlacke und deren $SiO_2$-Gehalt, welches höher ist als 1,2;
    - Trennen der erwähnten flüssigen Stahlschlacke vom erwähnten geschmolzenen Stahl;
    - Senken der Basizität der vom geschmolzenen Stahl getrennten flüssigen Stahlschlacke von der erwähnten ersten Basizität ($B_1$) auf eine zweite Basizität ($B_2$), indem zumindest ein Material mit niedriger Basizität in der flüssigen Stahlschlacke aufgelöst wird, wobei dieses Material mit niedriger Basizität mindestens 50 Gew.-% $SiO_2$ enthält und eine weitere Basizität hat, definiert als das Gewichtsverhältnis zwischen seinem CaO-Gehalt und seinem $SiO_2$-Gehalt, das gleich null ist, wenn es frei von CaO ist, oder das kleiner als 0,30 ist, wenn es CaO enthält; und
    - Erstarren der flüssigen Stahlschlacke mit der erwähnten zweiten Basizität ($B_2$) durch Abkühlen, um die erwähnte überwiegend kristalline erstarrte Stahlschlacke herzustellen,

    **dadurch gekennzeichnet, dass**
    die Differenz zwischen der erwähnten ersten Basizität ($B_1$) und der erwähnten zweiten Basizität ($B_2$) zwischen 0,02 und 0,2 beträgt und dass die flüssige Stahlschlacke, die erstarrt wird, um die erwähnte erstarrte Stahlschlacke herzustellen, zusammengesetzt ist, um $A$ Gew.-% $Al_2O_3$ zu enthalten, wobei $A$ durch die folgende Gleichung (1) definiert ist:

    $$A \geq -5.51 * (B_2 - M * 0.022 - F * 0.011)^2 + 26.67 * (B_2 - M * 0.022 - F * 0.011) - 23 \qquad \text{(Gleichung 1)};$$

    wobei:

    $A$ der $Al_2O_3$-Gehalt, ausgedrückt im Gewichtsanteil, der erstarrten Stahlschlacke ist;
    $M$ der MgO-Gehalt, ausgedrückt im Gewichtsanteil, der erstarrten Stahlschlacke ist;
    $F$ der $CaF_2$-Gehalt, ausgedrückt im Gewichtsanteil, der erstarrten Stahlschlacke ist, wobei $F$ gleich null ist, wenn die erstarrte Stahlschlacke frei von $CaF_2$ ist; und
    $B_2$ die erwähnte zweite Basizität der erstarrten Stahlschlacke ist.

2.  Das Verfahren nach Anspruch 1, **dadurch gekennzeichnet, dass** die Differenz zwischen der erwähnten ersten Basizität ($B_1$) und der erwähnten zweiten Basizität ($B_2$) kleiner ist als 0,17, bevorzugt kleiner als 0,14 und noch besser kleiner als 0,11.

3.  Das Verfahren nach Anspruch 1 oder 2, **dadurch gekennzeichnet, dass** die Differenz zwischen der erwähnten ersten Basizität ($B_1$) und der erwähnten zweiten Basizität ($B_2$) größer ist als 0,04, bevorzugt größer als 0,06.

4.  Das Verfahren nach irgendeinem der Ansprüche 1 bis 3, **dadurch gekennzeichnet, dass** $A$ durch die folgende Gleichung (2) definiert ist:

    $$A \geq -5.51 * (B_2 - M * 0.022 - F * 0.011)^2 + 26.67 * (B_2 - M * 0.022 - F * 0.011) - 22.26 \qquad \text{(Gleichung 2)}.$$

5.  Das Verfahren nach Anspruch 4, **dadurch gekennzeichnet, dass** $A$ durch die folgende Gleichung (3) definiert ist:

    $$A \geq -5.68 * (B_2 - M * 0.022 - F * 0.011)^2 + 27.21 * (B_2 - M * 0.022 - F * 0.011) - 21.2 \qquad \text{(Gleichung 3)};$$

    und bevorzugt durch die folgende Gleichung (4):

    $$A \geq -5.82 * (B_2 - M * 0.022 - F * 0.011)^2 + 27.64 * (B_2 - M * 0.022 - F * 0.011) - 20 \qquad \text{(Gleichung 4)}.$$

**6.** Das Verfahren nach irgendeinem der Ansprüche 1 bis 5, **dadurch gekennzeichnet, dass** A durch die folgende Gleichung (5) definiert ist:

$$A \leq -5.82 * (B_2 - M * 0.022 - F * 0.011 + a)^2 + 27.64 * (B_2 - M * 0.022 - F * 0.011 + a) - 18 \qquad \text{(Gleichung 5)},$$

wobei a gleich 0,40, bevorzugt gleich 0,30 und noch besser gleich 0,20 ist.

**7.** Das Verfahren nach irgendeinem der Ansprüche 1 bis 6, **dadurch gekennzeichnet, dass** zumindest ein erstes, an Aluminium reiches Material verwendet wird, um die erwähnte flüssige Stahlschlacke auf dem geschmolzenen Stahl herzustellen, wobei dieses erste, an Aluminium reiche Material einen Aluminiumgehalt, ausgedrückt in Gewichts-prozent von $Al_2O_3$, von mindestens 40 Gew.-% $Al_2O_3$, bevorzugt von mindestens 50 Gew.-% $Al_2O_3$ und noch besser von mindestens 60 Gew.-% $Al_2O_3$ hat.

**8.** Das Verfahren nach Anspruch 7, **dadurch gekennzeichnet, dass** das erwähnte erste, an Aluminium reiche Material metallisches Aluminium und/oder dreiwertiges Aluminium enthält, und bevorzugt Aluminiumkrätze und/oder zumindest Aluminiumoxide und/oder -hydroxide recycelt aus Aluminiumkrätze umfasst.

**9.** Das Verfahren nach Anspruch 8, **dadurch gekennzeichnet, dass** das erwähnte erste, an Aluminium reiche Material metallisches Aluminium enthält und bevorzugt mindestens 60 Gew.-%, noch besser mindestens 70 Gew.-% und am besten mindestens 80 Gew.-% metallisches Aluminium, ausgedrückt als Gewichtsanteil Al, enthält.

**10.** Das Verfahren nach irgendeinem der Ansprüche 1 bis 9, **dadurch gekennzeichnet, dass** zumindest ein zweites, an Aluminium reiches Material, welches einen Aluminiumgehalt, ausgedrückt in Gewichtsprozent von $Al_2O_3$, von mindestens 40 Gew.-% $Al_2O_3$, bevorzugt von mindestens 50 Gew.-% $Al_2O_3$ und noch besser von mindestens 60 Gew.-% $Al_2O_3$ hat, zur vom geschmolzenen Stahl getrennten flüssigen Stahlschlacke hinzugefügt wird.

**11.** Das Verfahren nach Anspruch 10, **dadurch gekennzeichnet, dass** das erwähnte zweite, an Aluminium reiche Material metallisches Aluminium enthält und bevorzugt mindestens 60 Gew.-%, noch besser mindestens 70 Gew.-% und am besten mindestens 80 Gew.-% metallisches Aluminium, ausgedrückt als Gewichtsanteil Al, enthält.

**12.** Das Verfahren nach Anspruch 10 oder 11, **dadurch gekennzeichnet, dass** das erwähnte zweite, an Aluminium reiche Material zumindest teilweise in die flüssige Stahlschlacke eingespritzt wird, während die flüssige Stahlschlacke in einen Schlackentopf abgestochen wird.

**13.** Das Verfahren nach irgendeinem der Ansprüche 1 bis 12, **dadurch gekennzeichnet, dass** die erwähnte erste Basizität ($B_1$) höher ist als 1,3 und insbesondere höher als 1,4.

**14.** Das Verfahren nach irgendeinem der Ansprüche 1 bis 13, **dadurch gekennzeichnet, dass** die erwähnte flüssige Stahlschlacke eine EAF-Edelstahlschlacke ist, hergestellt in einem Elektrolichtbogenofen.

**15.** Das Verfahren nach irgendeinem der Ansprüche 1 bis 13, **dadurch gekennzeichnet, dass** die erwähnte flüssige Stahlschlacke eine AOD-Edelstahlschlacke ist, hergestellt in einem Argon-Sauerstoff-Entkohlungsofen.

**16.** Das Verfahren nach irgendeinem der Ansprüche 1 bis 13, **dadurch gekennzeichnet, dass** die erwähnte flüssige Stahlschlacke eine LM-Edelstahlschlacke ist, hergestellt in einem Pfannenofen.

**17.** Das Verfahren nach irgendeinem der Ansprüche 1 bis 16, **dadurch gekennzeichnet, dass** das erwähnte zumindest eine Material mit niedriger Basizität in einer Menge von weniger als 5,0 %, bevorzugt in einer Menge von weniger als 4,0 % und noch besser in einer Menge von weniger als 3,0 % des Gewichts der geschmolzenen Stahlschlacke, die vom geschmolzenen Stahl getrennt ist, zugesetzt wird.

**18.** Das Verfahren nach irgendeinem der Ansprüche 1 bis 17, **dadurch gekennzeichnet, dass** die flüssige Stahlschlacke, welche erstarrt wird, um die erwähnte erstarrte Stahlschlacke herzustellen, mindestens 4,0 Gew.-% MgO, bevorzugt mindestens 5,0 Gew.-% MgO, und noch besser mindestens 6,0 Gew.-% MgO enthält.

**19.** Das Verfahren nach irgendeinem der Ansprüche 1 bis 18, **dadurch gekennzeichnet, dass** die flüssige Stahlschlacke, welche erstarrt wird, um die erwähnte erstarrte Stahlschlacke herzustellen, höchstens 15,0 Gew.-% MgO, bevorzugt höchstens 14,0 Gew.-% MgO, und noch besser höchstens 13,0 Gew.-% MgO enthält.

20. Das Verfahren nach irgendeinem der Ansprüche 1 bis 19, **dadurch gekennzeichnet, dass** die flüssige Stahlschlacke, die erstarrt wird, um die erwähnte erstarrte Stahlschlacke herzustellen, $CaF_2$ umfasst, insbesondere in einer Menge von zwischen 0,5 und 9 Gew.-% und bevorzugt in einer Menge von mindestens 1,0 Gew.-%.

21. Das Verfahren nach irgendeinem der Ansprüche 1 bis 20, **dadurch gekennzeichnet, dass** die überwiegend kristalline erstarrte Stahlschlacke zuerst luftgekühlt wird und nachfolgend gekühlt wird, indem Wasser auf die erstarrte Stahlschlacke aufgebracht wird, wobei das Abkühlen mit Wasser begonnen wird, wenn die durchschnittliche Temperatur der erstarrten Stahlschlacke, bestimmt als ein volumengewichteter Durchschnitt, noch stets höher ist als 550 °C, bevorzugt, wenn die durchschnittliche Temperatur der erstarrten Stahlschlacke noch stets höher ist als 600 °C, und noch besser, wenn die durchschnittliche Temperatur der erstarrten Stahlschlacke noch stets höher ist als 650 °C.

**Revendications**

1. Procédé de production d'un laitier d'acier solidifié principalement cristallin, comprenant les étapes suivantes consistant à :

   - produire un laitier d'acier liquide sur l'acier en fusion, lequel laitier d'acier liquide est composé d'au moins CaO, $SiO_2$, MgO et $Al_2O_3$ et a une première basicité *(B₁)*, définie comme le rapport en poids entre la teneur en CaO dudit laitier d'acier liquide et la teneur en $SiO_2$ de celui-ci, qui est supérieure à 1,2 ;
   - séparer le laitier d'acier liquide de l'acier en fusion ;
   - abaisser la basicité du laitier d'acier liquide séparé de l'acier en fusion de ladite première basicité *(B₁)* à une deuxième basicité *(B₂)* au moins partiellement en dissolvant au moins un matériau à faible basicité dans le laitier d'acier liquide, lequel matériau à faible basicité contient au moins 50 % en poids de $SiO_2$ et a une basicité supplémentaire, définie comme le rapport en poids entre sa teneur en CaO et sa teneur en $SiO_2$, qui est égale à zéro lorsqu'elle est exempte de CaO ou qui est inférieure à 0,30 lorsqu'elle contient du CaO ; et
   - solidifier le laitier d'acier liquide ayant ladite deuxième basicité *(B₂)* en le refroidissant pour produire ledit laitier d'acier solidifié principalement cristallin,

   **caractérisé en ce que**
   la différence entre ladite première basicité *(B₁)* et ladite deuxième basicité *(B₂)* est comprise entre 0,02 et 0,2 et le laitier d'acier liquide qui est solidifié pour produire ledit laitier d'acier solidifié est composé pour contenir *A* % en poids d'$Al_2O_3$, *A* étant défini par l'équation suivante (1) :

   $$A \geq -5.51 * (B_2 - M * 0.022 - F * 0.011)^2 + 26.67 * (B_2 - M * 0.022 - F * 0.011) - 23 \qquad \text{(Équation 1)}$$

   dans lequel :

   *A* est la teneur en $Al_2O_3$, exprimée en pourcentage en poids, du laitier d'acier solidifié ;
   *M* est la teneur en MgO, exprimée en pourcentage de poids, du laitier d'acier solidifié ;
   *F* est la teneur en $CaF_2$, exprimée en pourcentage en poids, du laitier d'acier solidifié, *F* étant égal à zéro lorsque le laitier d'acier solidifié est exempt de $CaF_2$; et
   *B₂* est ladite deuxième basicité du laitier d'acier solidifié.

2. Procédé selon la revendication 1, **caractérisé en ce que** la différence entre ladite première basicité *(B₁)* et ladite deuxième basicité *(B₂)* est inférieure à 0,17, de préférence inférieure à 0,14 et plus préférentiellement inférieure à 0,11.

3. Procédé selon la revendication 1 ou 2, **caractérisé en ce que** la différence entre ladite première basicité *(B₁)* et ladite deuxième basicité *(B₂)* est supérieure à 0,04, de préférence supérieure à 0,06.

4. Procédé selon l'une quelconque des revendications 1 à 3, **caractérisé en ce que** *A* est défini par l'équation suivante (2) :

   $$A \geq -5.51 * (B_2 - M * 0.022 - F * 0.011)^2 + 26.67 * (B_2 - M * 0.022 - F * 0.011) - 22.26 \qquad \text{(Équation 2)}$$

**5.** Procédé selon la revendication 4, **caractérisé en ce que** $A$ est défini par l'équation suivante (3) :

$$A \geq \text{-}5.68 * (B_2 - M * 0.022 - F * 0.011)^2 + 27.21 * (B_2 - M * 0.022 - F * 0.011) - 21.2 \qquad \text{(Équation 3)}$$

et de préférence par l'équation suivante (4) :

$$A \geq \text{-}5.82 * (B_2 - M * 0.022 - F * 0.011)^2 + 27.64 * (B_2 - M * 0.022 - F * 0.011) - 20 \qquad \text{(Équation 4)}$$

**6.** Procédé selon l'une quelconque des revendications 1 à 5, caractérisé en que $A$ est défini par l'équation suivante (5) :

$$A \leq \text{-}5.82 * (B_2 - M * 0.022 - F * 0.011 + a)^2 + 27.64 * (B_2 - M * 0.022 - F * 0.011 + a) - 18 \qquad \text{(Équation 5)}$$

où a est égal à 0,40, de préférence égal à 0,30 et plus préférentiellement égal à 0,20.

**7.** Procédé selon l'une quelconque des revendications 1 à 6, **caractérisé en ce que** au moins un premier matériau riche en aluminium est utilisé pour produire ledit laitier d'acier liquide sur l'acier en fusion, lequel premier matériau riche en aluminium ayant une teneur en aluminium, exprimée en pourcentage en poids d'$Al_2O_3$, d'au moins 40 % en poids d'$Al_2O_3$, de préférence d'au moins 50 % en poids d'$Al_2O_3$ et plus préférentiellement d'au moins 60 % en poids d'$Al_2O_3$.

**8.** Procédé selon la revendication 7, **caractérisé en ce que** ledit premier matériau riche en aluminium contient de l'aluminium métallique et/ou de l'aluminium trivalent, et comprend de préférence des scories d'aluminium et/ou au moins des oxydes et/ou hydroxydes d'aluminium recyclés à partir de scories d'aluminium.

**9.** Procédé selon la revendication 8, **caractérisé en ce que** ledit premier matériau riche en aluminium contient de l'aluminium métallique et, de préférence, au moins 60 % en poids, de préférence au moins 70 % en poids et de préférence encore au moins 80 % en poids d'aluminium métallique, exprimé en pourcentage en poids d'Al.

**10.** Procédé selon l'une quelconque des revendications 1 à 9, **caractérisé en ce qu'**au moins un deuxième matériau riche en aluminium, dont la teneur en aluminium, exprimée en pourcentage en poids d'$Al_2O_3$, est d'au moins 40 % en poids d'$Al_2O_3$, de préférence d'au moins 50 % en poids d'$Al_2O_3$ et plus préférentiellement d'au moins 60 % en poids d'$Al_2O_3$, est ajouté au laitier d'acier liquide séparé de l'acier en fusion.

**11.** Procédé selon la revendication 10, **caractérisé en ce que** le deuxième matériau riche en aluminium contient de l'aluminium métallique et de préférence au moins 60 % en poids, de préférence au moins 70 % en poids et de préférence encore au moins 80 % en poids d'aluminium métallique, exprimé en pourcentage en poids d'Al.

**12.** Procédé selon la revendication 10 ou 11, **caractérisé en ce que** ledit deuxième matériau riche en aluminium est injectée au moins partiellement dans le laitier d'acier liquide lors du soutirage du laitier d'acier liquide dans un pot à laitier.

**13.** Procédé selon l'une quelconque des revendications 1 à 12, **caractérisé en ce que** ladite première basicité ($B_1$) est supérieure à 1,3 et en particulier supérieure à 1,4.

**14.** Procédé selon l'une quelconque des revendications 1 à 13, **caractérisé en ce que** le laitier d'acier liquide est un laitier d'acier inoxydable produit dans un four électrique à arc.

**15.** Procédé selon l'une quelconque des revendications 1 à 13, **caractérisé en ce que** le laitier d'acier liquide est un laitier d'acier inoxydable AOD produit dans un four de décarburation à l'argon et à l'oxygène.

**16.** Procédé selon l'une quelconque des revendications 1 à 13, **caractérisé en ce que** le laitier d'acier liquide est un laitier d'acier inoxydable LM produit dans un four à poche.

**17.** Procédé selon l'une quelconque des revendications 1 à 16, **caractérisé en ce que** ledit au moins un matériau à faible basicité est ajouté en une quantité inférieure à 5,0 %, de préférence en une quantité inférieure à 4,0 % et plus préférentiellement en une quantité inférieure à 3,0 % du poids du laitier d'acier en fusion qui est séparé de l'acier en fusion.

**18.** Procédé selon l'une quelconque des revendications 1 à 17, **caractérisé en ce que** le laitier d'acier liquide qui est solidifié pour produire ledit laitier d'acier solidifié comprend au moins 4,0 % en poids de MgO, de préférence au moins 5,0 % en poids de MgO, et plus préférentiellement au moins 6,0 % en poids de MgO.

**19.** Procédé selon l'une quelconque des revendications 1 à 18, **caractérisé en ce que** le laitier d'acier liquide qui est solidifié pour produire ledit laitier d'acier solidifié comprend au maximum 15,0 % en poids de MgO, de préférence au maximum 14,0 % en poids de MgO, et plus préférentiellement au maximum 13,0 % en poids de MgO.

**20.** Procédé selon l'une quelconque des revendications 1 à 19, **caractérisé en ce que** le laitier d'acier liquide qui est solidifié pour produire ledit laitier d'acier solidifié comprend du $CaF_2$, en particulier dans une quantité comprise entre 0,5 et 9 % en poids et de préférence dans une quantité d'au moins 1,0 % en poids.

**21.** Procédé selon l'une quelconque des revendications 1 à 20, **caractérisé en ce que** le laitier d'acier solidifié principalement cristallin est d'abord refroidi à l'air, puis par l'application d'eau sur le laitier d'acier solidifié, le refroidissement à l'eau commençant lorsque la température moyenne du laitier d'acier solidifié, déterminée comme une moyenne pondérée en fonction du volume, est encore supérieure à 550°C, de préférence lorsque la température moyenne du laitier d'acier solidifié est encore supérieure à 600°C et plus préférentiellement lorsque la température moyenne du laitier d'acier solidifié est encore supérieure à 650°C.

**F i g . 1**

*Fig.2*

Fig. 3

Fig. 4

**Fig. 5**

10 % MgO

EP 3 901 289 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4957547 A

- WO 2015144903 A

### Non-patent literature cited in the description

- **Y. PONTIKES et al.** Options to prevent dicalcium silicate-driven disintegration of stainless steel slags. *Archives of Metallurgy and Materials*, vol. 55 (4)
- **R. I. LACOBESCU et al.** *Stabilisation and Micro-structural Modification of Stainless Steel Converter Slag by Addition of an Alumina Rich By-Product*, 04 January 2014

- Effects of MgO based glass addition on the dusting of stainless steel slag. *Current Advance in Material and Processes*, 2001, vol. 14 (4), 939
- **Q. YANG et al.** Stabilization Studies of EAF Slag for Its Use as Materials in Construction. *Proceedings, Asiasteel*, 24 September 2012